# EUROPEAN PATENT APPLICATION

(11) **EP 2 982 967 A1**
(43) Date of publication of application: **10.02.2016**
(21) Application number: 14179973.4
(22) Date of filing: 06.08.2014
(51) Int. Cl.: G01N 21/65, G01J 3/44, C25D 21/12, G01N 21/27, C25D 5/00

(54) **Method and system for real time in-situ monitoring of a solution during a solution based process**

(71) Applicant: Nexcis, 13790 Rousset (FR); Fundacio Institut Recerca en Energia de Catalunya, 08930 Barcelona (ES); Universitat de Barcelona, 08028 Barcelona (ES)
(72) Inventor: Grand, Pierre-Philippe, 83470 Saint-Maximin la Sainte Baume (FR); Ferrer, Jesus Salvador Jaime, 13090 Aix en Provence (FR); Benito, Veronica Bermudez, 83470 St Maximin la Ste Baume (FR); Silva, Edgardo Saucedo, 08001 Barcelona (ES); Roca, Víctor Izquierdo, 08014 Barcelona (ES); Fairbrother, Andrew, Albuquerque, NM New Mexico 87109 (US); Sylla, Diouldé, 08014 Barcelona (ES); Perez Rodriguez, Alejandro, 08029 Barcelona (ES)
(74) Representative: Cabinet Camus Lebkiri

(57) **Abstract**

The invention concerns a method and system for real time in situ monitoring of a solution during a solution based process, a reference sample (6) being immersed in the solution, the method comprising the following steps:
- Emitting an excitation light in the solution and on the reference sample (6);
- Collecting a Raman spectrum generated by the solution and by the reference sample (6);
- Comparing the Raman spectrum generated by the solution with the Raman spectrum generated by the reference sample (6).

The system comprises a Raman probe (4) comprising an emission source (1) and a photodetector unit (2). Preferably the excitation light is guided to the solution and the reference sample (6) via an optical fiber (3). Preferably the Raman scattered light is guided to the photodetector unit (2) via an optical fiber (3).

## Description

### FIELD OF THE INVENTION

The present invention relates to a method and system to provide real time and in situ monitoring for determining characteristics of a solution.

### BACKGROUND OF THE INVENTION

Chemical or electrochemical baths are frequently used for film deposition, surface treatments, etching, functionalization, activation and other processes.

In all these processes, bath stability with time is of high importance because the solution chemistry is especially important in determining final film and surface properties. As such, monitoring of components and their concentration, including degradation and identification of potential contaminants, is very important for quality control and process stability at industrial production levels.

It is known that Raman scattering spectroscopic techniques can provide real time and in situ monitoring for determining characteristics of a solution. Such a method is described in the document US2003/0049858 for metal plating. Analyte concentration is measured by calculating the absolute height or area of the Raman peaks measured of a solution. However, it needs to be calibrated and it is strongly dependent on system settings such as laser stability, bath opacity, variations in temperature. Moreover, the system of this document requires the use of an external flow cell.

### SUMMARY OF THE INVENTION

The present invention aims at overcoming the above mentioned technical problems by providing a method and system for real time in situ monitoring of a solution, especially of a solution during a solution based process, with very high reproducibility and with a very high measurement precision.

To that purpose, the invention suggests to use a reference sample which is measured simultaneously with the solution by Raman spectroscopy. Comparison of peak ratios between the solution and the reference sample, rather than absolute intensities, is then used for qualitative or quantitative analysis. Because of the reference sample, the measurement precision is maintained independently of changes in the system settings such as laser stability, bath opacity, variations in temperature, and type of analyte.

More precisely, a first aspect of the invention concerns a method for real time in situ monitoring of a solution during a solution based process, a reference sample being immersed in the solution, the method comprising the following steps:
- Emitting an excitation light in the solution and on the reference sample;
- Collecting a Raman spectrum generated by the solution and by the reference sample;
- Comparing the Raman spectrum generated by the solution with the Raman spectrum generated by the reference sample.

The use of the reference sample enables the reduction of measurement error. As a matter of fact, the reference sample is particularly important because absolute intensity of the Raman signal can vary with time due to a number of factors, including laser stability, changes of temperature, changes of optical transmission of the bath or turbulence effects, among others. Consequently, without the reference sample, we do not know if a modification of an analyte peak is linked to a modification of the solution composition or if it is linked to changes in the system used to perform the Raman spectroscopy.

The method according to the first aspect of the invention may also comprise one or several of the following features, taken individually or according to all possible technical combinations.

Advantageously, the step of comparing the Raman spectrum of the solution with the Raman spectrum of the reference sample comprises the following steps:
- Identifying at least one reference peak representing the reference sample in the Raman spectrum;
- Identifying at least one analyte peak representing an analyte of the solution in the Raman spectrum;
- Monitoring the ratio between a parameter of the analyte peak and a parameter of the reference peak.

Advantageously, the parameter of the analyte peak is the area or intensity of the analyte peak, the parameter of the reference peak being the area or intensity of the reference peak.

Advantageously, the excitation light for Raman spectroscopy is emitted into the solution by a Raman probe, the Raman spectrum being collected by the Raman probe, the Raman probe being immersed in the solution. The immersion of the Raman probe enables the exclusion of ambient light in order to improve the measurement precision.

Advantageously, the reference sample has Raman peaks distinct from the Raman peaks expected for the solution for easier resolution of peaks. The reference sample is preferably chosen in function of the excitation laser and solution properties in order to be easily resolved from the Raman peaks of the main analytes expected in the solution.

According to different embodiments:
- the reference sample may be directly immersed in the solution. In this embodiment, the reference sample must be inert to the solution; or
- the reference sample may be placed in a sealed ampoule, the sealed ampoule being immersed in the solution, the sealed ampoule being transparent to the Raman excitation light and to the light scattered by the reference sample. This embodiment is preferable when it is not possible or easy to find a reference sample inert to the solution, for example, because the solution is corrosive or because the needed reference sample may interact with the solution.

Advantageously, the method may further comprise 35 an optimization step wherein the position of the reference sample with respect to the Raman probe is chosen so that the intensity of the reference peak is comparable with to the Raman peaks of the solution, this is so that the reference peaks do not interfere in the interpretation and resolving of the analyte peaks.

Advantageously, the method may further comprise a step of determining the quantity of an analyte contained in the solution by comparing the ratio for this analyte with a calibration curve.

A second aspect of the invention concerns a system for real time in situ monitoring of a solution during a solution based process, the system comprising:
- A Raman probe comprising an excitation source able to emit monochromatic light (a laser) and a photodetector unit able to collect the Raman spectrum generated by the solution;
- A reference sample able to generate a constant spectrum when excited by the laser light emitted by the Raman probe.

The system according to the second aspect of the invention may also comprise one or several of the following features, taken individually or according to all possible technical combinations.

Advantageously, the reference sample has Raman peaks distinct from the Raman peaks of the analyte contained in the solution.

According to different embodiments, the reference sample may be made of one of the following materials: quartz, polypropylene, silicon, sulfur dioxide, titanium dioxyde. Alternatively other materials may be used for the reference sample, and selected according to the excitation conditions and solution properties.

Advantageously, the reference sample can be surrounded by a sealed ampoule.

Advantageously, the reference sample is able to stay inert when immersed in the solution.

Advantageously, the Raman probe is able to be immersed in the solution.

Advantageously, the emission source comprises an excitation optical fiber, the excitation optical fiber being coupled to a monochromatic light source, the excitation unit comprising a reception optical fiber coupled to a detector configured to detect a Raman spectrum of the solution.

A third aspect of the invention concerns the use of the system according to the second aspect of the invention to monitor an electrochemical bath during an electroplating process.

A fourth aspect of the invention concerns the use of the method according to the first aspect of the invention to monitor an electrochemical bath during an electroplating process. Alternatively, the method according to the first aspect of the invention could be used to monitor any solution based process during deposition, surface modification, activation, etching, functionalization.

### BRIEF DESCRIPTION OF THE DRAWINGS

Additional characteristics and advantages of the invention will appear in the detailed description of an embodiment of the method applied to monitoring of electroplating of Cu, In, and Ga thin films, as well as to monitoring of the composition of a NaOH bath, with reference to the following figures:
- Fig. 1 represents a schematic diagram of the experimental device to carry out the presented method of this invention;
- Fig. 2 represents the Raman spectrum of different solutions.
- Fig. 3 represents the calculation of analyte concentration with the integral area method.
- Fig. 4 represents the calculation of analyte concentration with the peak deconvolution method.
- Fig. 5 represents Raman scattering spectra of solutions of CuSO₄, Ga₂O₃, In₂(SO₄)₃, and an internal reference. The spectrum from the CuSO₄ solution was measured with 514 nm excitation wavelength, while the others were measured with 785 nm excitation wavelength. The first two baths of CuSO₄, Ga₂O₃ were measured without a reference sample.
- Fig. 6 represents the Raman peak of Ga(OH)₄⁻ normalized to the intensity of the main Raman peak from a reference sample measured from Ga₂O₃ solutions prepared with different Ga content.
- Fig. 7 represents the linear correlation between the relative intensity of the Ga(OH)₄⁻ Raman peak with the total Ga content in the solution. Linear dependence of the relative Raman peak with the total Ga content shows a very good fitting, with an R-square value of 0.999 for the linear fitting
- Fig. 8 represents the Raman spectra from a In₂(SO₄)₃ electroplating solution normalized to the intensity of the main Raman peak from the reference sample in the 800 - 1050 cm⁻¹ spectral region, measured from solutions prepared with different In content.
- Fig. 9 represents the linear correlation between the relative intensity of the SO₄⁻ Raman peak with the total In content in the solution. Lineal dependence of the relative Raman peak with the total In content leads to a good fitting with an R-square value of 0.999.
- Fig. 10 represents the Raman spectra of indium and gallium aged electrochemical baths after use in the sequential deposition of Cu, In and Ga. The aged baths show the presence of peaks that indicate the existence of copper and sulfate cross contamination between the baths that is determined from their sequential use in the process line.
- Fig. 11 represents the Raman spectra from NaOH baths prepared with different compositions. In this case, changes in the composition of the bath are determined by changes in the contribution at the 250-350 cm⁻¹ spectral region.

In all these figures, measuring times of the Raman spectra are of the order of seconds.

### DETAILED DESCRIPTION OF THE INVENTION

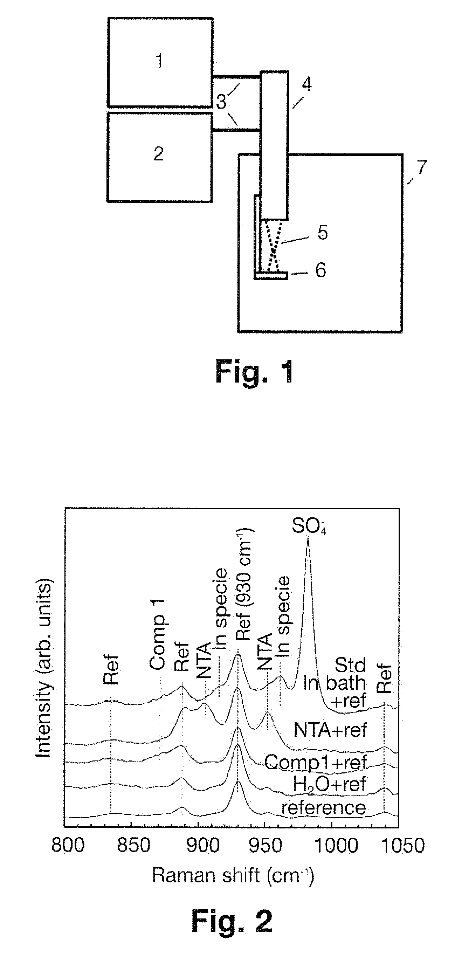

Fig. 1 represents a system for real time in situ monitoring of a solution during a solution based process according to a second aspect of the invention. This system comprises a Raman probe 4 configured to be immersed in the solution. The Raman probe is designed to withstand the corrosive nature of the solution when the solution to monitor is corrosive.

The Raman probe 4 preferably comprises an emission source 1 able to emit monochromatic light for excitation, a laser. The emission unit 1 preferably couples to an optical fiber 3.

The Raman probe 4 also preferably couples via an optical fiber 3 to a photodetector 2 which is able to collect a Raman scattered light generated by the solution and by the reference sample.

The Raman probe preferably comprises a probe window that is transparent to the chosen Raman excitation light as well as to wavelengths at which Raman peaks are expected.

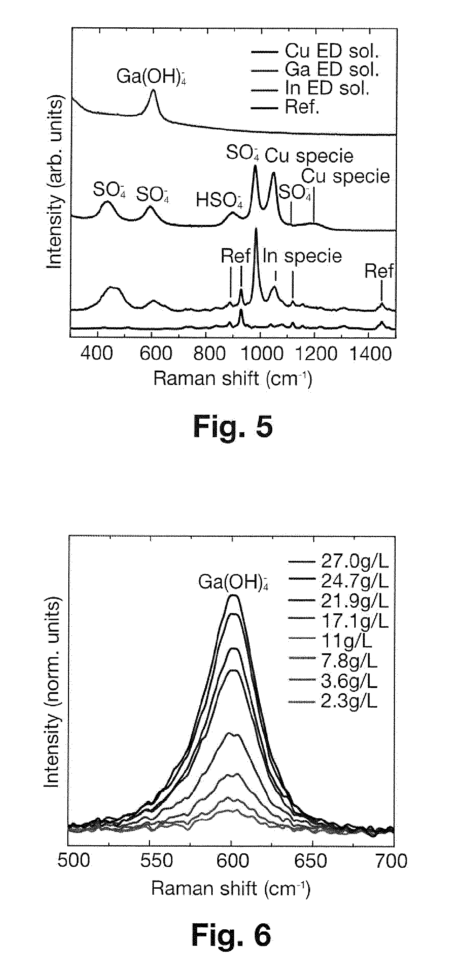

The system also comprises a reference sample 6. The reference sample 6 is chosen to generate Raman scattered light when excited by the excitation light enabling to excite the solution so that it generates Raman scattered light. According to different embodiments, the reference sample may be directly immersed in the solution or it may be placed in a sealed ampoule, itself immersed in the solution. The reference sample is chosen to generate Raman peaks at wavelengths distinct from the wavelengths expected for the solution. Consequently, the reference sample must be chosen according to the solution to monitor so that these peaks do not interfere or overlap strongly with the peaks of the solution. For example, for a gallium oxide electroplating bath, as shown in Fig. 5, the following are potential reference samples which do not strongly overlap with the main Raman peak at 600 cm⁻¹:
- a reference sample of quartz, having Raman peaks at 464 cm⁻¹ and 206 cm⁻¹ could be chosen;
- a reference sample of polypropylene, having Raman peaks of 929 cm⁻¹ and 888 cm⁻¹ could be chosen;
- a reference sample of silicon, having Raman peaks at 520 cm⁻¹ could be chosen.

In contrast, for the copper and indium electroplating baths shown in Fig. 5, only polypropylene and silicon are acceptable reference samples from these examples; the quartz reference has a main Raman peak at 464 cm⁻¹ which strongly overlaps with a peak related to the analytes in solution.

The excitation light transmitted by the Raman probe should be chosen according to the solution to monitor and according to the reference sample. As a matter of fact, the solution should be transparent to the wavelength of the excitation light. Besides, the solution and reference samples should have a good scattering cross section at the wavelength of the excitation light in order to generate a strong Raman signal and for high measurement fidelity. For example:
- to monitor an electroplating solution of copper sulfate, we could chose a Raman excitation light with an excitation wavelength of 532 nm;
- to monitor an electroplating solution of indium sulfate or gallium oxide, we could chose a Raman excitation light with an excitation wavelength of 785 nm.

In operation, the Raman probe is immersed in the solution, together with the reference sample. The position of the reference sample should be optimized in order to obtain a comparable Raman signal for the solution and for the reference sample. To that purpose, the reference sample could be placed at a fixed distance before, after or in the focal point 5 of the laser. Preferably, this should be adjusted so that the peaks of the reference sample do not interfere with the resolution of the analyte peaks.

The emission source 1 generates the excitation light which is transmitted in the solution and on the reference sample via the optic cables 3 and Raman probe 4. When excited by the excitation light, the solution and the reference sample scatter the light, and generate a Raman spectrum with peaks at one or more wavelengths or so-called Raman shift, each peak representing either an analyte of the solution or the reference sample.

The Raman probe 4 receives the Raman spectrum and transmits it to the photodetector 2 through the optic cables 3. The Raman spectrum may then be analyzed in order to detect which analytes are in solution and in which quantity.

As a matter of fact, as represented in Fig. 2, each peak is representative of an analyte or of the reference sample. The method comprises then a step of identification wherein each peak is associated with an analyte in solution or with the reference sample.

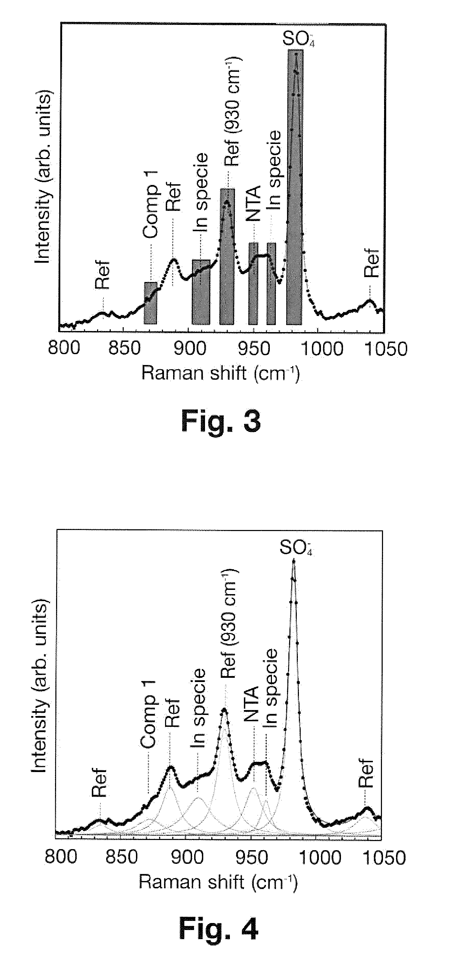

Each of the peaks has an associated area and height. The method comprises then a step of computing the area and height of each peak, for example by using an area integration method as represented in Fig. 3 or by using a deconvolution method as represented in Fig. 4. Each of these processes - area integration and deconvolution - can be used to calculate the relative quantity of a certain component. For example, area integration is used in DOI: 10.1149/1.3559162, and deconvolution is used in DOI: 10.1016/j.tsf.2008.10.080.

The method comprises then a step of calculating the ratio between a parameter of the main peak representing each analyte of interest and the same parameter of the main peak representing the reference sample. This parameter is preferably the area or height of a peak. This normalization of a given parameter of a peak representing an analyte by the same parameter of the peak representing the reference sample enables the measurement to be free from the changes in the Raman spectroscopy system 1-6 and to only measure the changes in the solution composition.

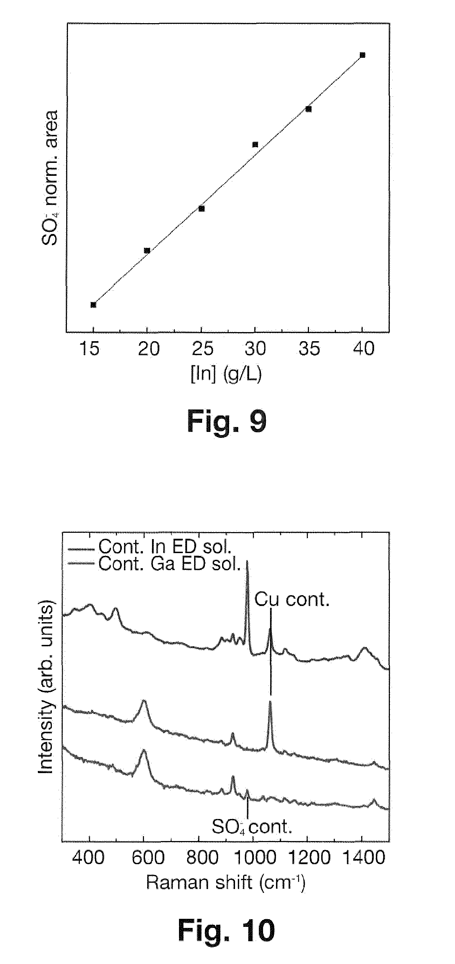

The method according to this embodiment comprises first a step of calibration:
1) A series of solutions for calibration are prepared, and may be used to quantitative or qualitative analysis:
   - In case of quantitative analysis, a series of calibration solutions with known analyte concentration in the range of interest for intended application is first prepared. In this type of analysis the calibration series allows an exact numerical measurement of the analyte concentration.
   - In case of qualitative analysis, a series of calibration solution with the desired concentration, and solutions with the acceptable or desired range of concentrations is prepared. This method, in contrast to the quantitative method, does not result in an exact numerical measurement of the concentration of an analyte. Instead, the desired concentration for a solution based process is determined, for example, resulting in a peak area of 500 cm⁻¹, and an acceptable range is given, for example, ±10 cm⁻¹. For a quantitative analysis in this example, the area of the solution would be continuously measured, and while it is in the range of 490-510 cm⁻¹, it is considered acceptable for the solution based process. This method may be more practical in a commercial production line setting where the exact concentration is not a significant concern to a technician or operator, but rather, that the process operates in a range with a given tolerance to variation.
2)In conjunction with 1), preparation of analyte solutions with potential contaminants. This aids the detection of deviations in the solution concentrations. Examples are shown in Fig. 10 for indium and gallium electroplating baths. In a preferred embodiment of this invention, sequential deposition of copper, indium and gallium is performed. As such, there exists the possibility of contamination from prior deposition steps, in Fig. 10, copper is detected in the indium and gallium baths, and sulfate analytes are detected in the gallium bath. These contaminants can influence the solution based process, and it is important to detect them.

The method comprises then a step of selection of a reference sample, ideally one with Raman peaks very distinct from analyte solution for easier resolution of peaks, i.e. quartz with two main peaks at 464 cm⁻¹ and 206 cm⁻¹, or polypropylene with two main peaks at 929 cm⁻¹ and 888 cm⁻¹, or silicon with one main peak at 520 cm⁻¹. The reference sample may be placed directly in the solution, or in a sealed ampoule which is transparent to excitation wavelength used for the monitoring, in the case a corrosive solution is measured or the references sample can interact with the solution to monitor.

The method comprises then a step of selection of an excitation light. The Raman excitation light is preferably chosen in order to have a wavelength which is transparent to the solution, with a good scattering cross section in the analyte solution for strong Raman signal and higher measurement fidelity, i.e. 532 nm to monitor an electroplating solution of copper sulfate, or 785 nm to monitor an electroplating solution of indium sulfate.

The method comprises then a step of set-up of the Raman probe wherein the position of the reference sample is optimized to obtain a comparable signal of the peaks to analyze, so that the reference peak does not interfere with the identification and resolution of the analyte peaks.

The method comprises then a step of Raman scattering analysis wherein the excitation light is transmitted into the solution and on the reference sample and wherein the Raman spectrum generated by the solution and by the reference sample in response to the excitation light is collected by the photodetector unit.

The method comprises then a step of processing of data signal acquired from the solution and reference sample using a mathematical deconvolution method using fittings with Lorentzian, Gaussian, or other types of curves of the Raman peaks as represented in Fig. 4 or an integration area method as represented in Fig. 3, for each component in analyte solutions.

The method comprises then a step of associating each peak to an analyte and/or to the reference sample by using the data obtained during the calibration step. When a single element is represented by several peaks, the strongest peak is typically selected as representative of this element. Alternatively, weaker peaks may be selected if the strongest peak overlaps strongly with other components of the solution.

The method comprises then a step of calculating ratio between the most representative peak for each analyte and the most representative peak for the reference sample.

The method may then comprise a step of quantitative analysis wherein we perform correlation of analyte concentrations to ratio of deconvoluted peaks areas representative of the solution with peak representative of the reference sample. This provides a calibration curve for future analysis of solutions used in actual production process, as demonstrated in Fig. 4. Alternatively, integration of an area of interest - the area integration method - may be used, as demonstrated in Fig. 3. With the calibration curve generated by a series of solutions with different concentration, the actual concentration of a certain solution can be determined.

The method may then comprise a step of qualitative analysis wherein the Raman spectrum of the solution is compared with the Raman spectrum of the reference sample. Instead of calculating the actual concentration, as is done during quantitative calibration, the area of the analyte peak is compared with a desired value, and tested to see if it falls within an accepted range for the production process.

This methodology may be used to assess stationary baths or with in-line process monitoring where there is an evolution of analyte species with time. These steps make is possible to identify different analytes and contaminants in real-time, with measurement times on the order of seconds. The use of the reference sample greatly improves the accuracy and fidelity of the measurement because peak ratios of the analyte with the reference signal are much more stable over time. Any characterization technique is liable to deviations over the course of minutes, hours, or days, thus necessitating recalibration with internal standards from time to time. This invention integrates a reference to serve as a recalibration standard in every measurement. Potential causes of reduced precision in Raman measurements include variations in laser strength/power, bath temperature, changes in bath opacity, bath turbulence (agitation, bubble), anything that can influence the scattering volume of the bath.

The above mentioned method will now be described when applied for monitoring an electroplating solution during an electroplating process of Cu, In, and Ga thin films used as precursors for the manufacture of solar cells based on Cu(In,Ga)Se₂.

The electroplating process involves application of a current across electrodes in an electrochemical bath. The applied current leads to the deposition of dissolved species on the substrate, and consumption or dissolution of the anode.

In addition to the ionic species which are to be deposited, electroplating baths commonly include other components to assist the deposition process. These include additives called accelerators, suppressors, levelers, complexing agents, support electrolytes, and others used to control the solution pH. During the electroplating process, some components are consumed or degraded at a certain rate, requiring the bath to be replenished, treated, or replaced over time.

A system as described by reference to Fig. 1 is used to monitor the electroplating bath, also named "solution" in the following description. In this embodiment, the reference sample is a polystyrene sheet. This reference sample has a main Raman peak at 929 cm⁻¹. This reference sample 6 may be placed before, in, or behind the focal point of the laser 5.

The Raman probe may be immersed directly into the solution reservoir 7 or outside of the reservoir 7 using optical windows. Moreover, the system 1-6 requires no external analysis cell or sample preparation.

In principle any kind of monochromatic excitation source may be used, and should be adapted depending on the absorption of the chemical solution to be analyzed. For example, 785 nm excitation is adequate for the analysis of Ga₂O₃ and In₂(SO₄)₃ electrochemical plating baths, while inadequate for measurement of the CuSO₄ bath, which requires an excitation source such as 514 nm or 532 nm. The Raman spectra of CuSO₄, Ga₂O₃ and In₂(SO₄)₃ baths and the reference sample are represented in Fig. 4.

A method according to one embodiment of the invention has been applied to electrochemical baths for Ga and In electroplating. The gallium bath is composed of Ga₂O₃ and NaOH. The indium electrochemical baths are composed of In₂(SO₄)₃, nitrilotriacetic trisodium acid (NTA), and an proprietary component hereafter referred to as Component 1. The concentration of each known component has been varied, and changes in the Raman spectra of the solutions are noted.

Fig. 6 shows Raman spectra for the gallium bath with varying concentrations of gallium, from 2.3 to 27.0 g/L.

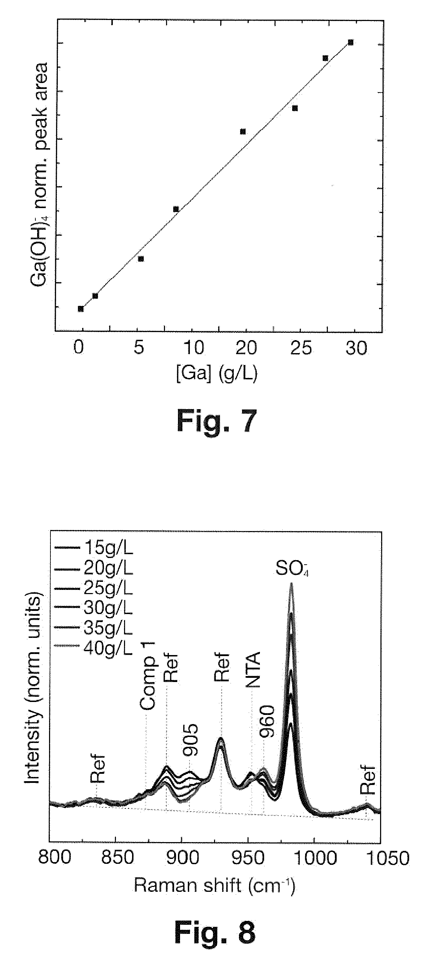

Fig. 7 shows the peak area of Ga(OH)₄⁻ normalized to the intensity of the main Raman peak from the reference sample versus the Ga concentration. Normalizing the spectra to the main peak of the reference sample at 929 cm⁻¹ significantly improves the fitting of the data since the fitting R² value is 0.999.

Fig. 8 shows the Raman spectra of the more complex indium electrochemical bath, in the 800 - 1050 cm⁻¹ spectral region, for solutions with different In concentration, from 15g/l to 40g/l. In this case, changes in the concentration of indium in the solution lead to a linear change of the relative intensity of the SO₄⁻ Raman peak, as shown in Fig. 9.

As another example of the use of a method according to one embodiment of the invention, Fig. 10 shows the gallium and indium electrochemical baths with different contaminants from aging after their sequential use in a process line. Based on expected contaminants, due to the sequential nature of this particular deposition process, it is possible to identify contamination from copper in two of the spectra, and sulfates in the other.

While the present invention has been particularly described with reference to the preferred embodiments, it should be readily apparent to those of ordinary skill in the art that changes and modifications in form and details may be made without departing from the scope of the invention.

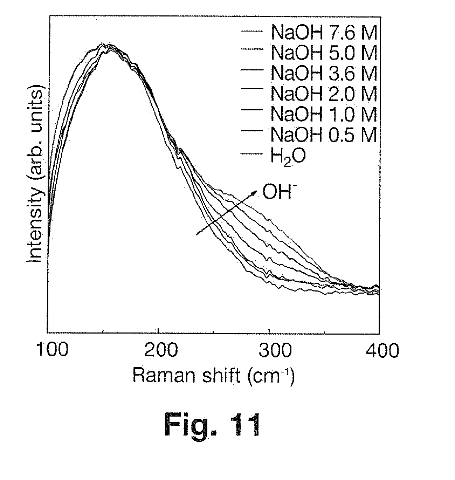

For example, in addition to electroplating, the invention may also be used for the monitoring and control of any solution based process. As an additional example of an embodiment of the invention, Fig. 11 shows Raman spectra of NaOH based baths, used for example in paper and alumina industrial production. As shown on this figure, changes in the composition of the bath may be monitor by the corresponding changes in the Raman contribution at the 250-350 cm⁻¹ spectral region. As the concentration of NaOH increases, the side or shoulder of the water related peak centered around 160 cm⁻¹ increases in the region of higher Raman shift. In this instance the area integration method can be used to determine the concentration of NaOH.

## Claims

1. Method for real time in situ monitoring of a solution during a solution based process, a reference sample being immersed in the solution, the method comprising the following steps:
- Emitting an excitation light in the solution and on the reference sample;
- Collecting a Raman spectrum generated by the solution and by the reference sample;
- Comparing the Raman spectrum generated by the solution with the Raman spectrum generated by the reference sample.

2. Method according to the previous claim, wherein the step of comparing the Raman spectrum generated by the solution with the Raman spectrum generated by the reference sample comprises the following steps:
- Identifying at least one reference peak representing the reference sample in the Raman spectrum;
- Identifying at least one analyte peak representing an analyte of the solution in the Raman spectrum;
- Monitoring the ratio between a parameter of the analyte peak and a parameter of the reference peak.

3. Method according to the previous claim, wherein the parameter of the analyte peak is the area or intensity of the analyte peak, the parameter of the reference peak being the area or intensity of the reference peak.

4. Method according to any of claims 2 or 3, further comprising a step of determining the quantity of an analyte contained in the solution by comparing the ratio for this analyte with a calibration curve.

5. Method according any of the previous claims, wherein the excitation light is emitted by a Raman probe, the Raman spectrum being collected by the Raman probe, the Raman probe being immersed in the solution.

6. Method according to any of the previous claims, wherein the reference sample produces Raman peaks distinct from the Raman peaks expected for the solution.

7. Method according to any of the previous claims, further comprising an optimization step wherein the position of the reference sample with respect to the Raman probe is chosen so that the reference peak is comparable with to the Raman peaks expected for the solution.

8. System for real time in situ monitoring of a solution during a solution based process, the system comprising:
- A Raman probe comprising an emission source able to emit an excitation light and a photodetector unit able to collect Raman spectrum generated by the solution, the Raman probe being able to be immersed in the solution;
- A reference sample able to generate a constant Raman spectrum when excited by the excitation light transmitted by the Raman probe.

9. System according to the previous claim, wherein the reference sample is made of one of the following materials: quartz, polypropylene, silicon, sulfur dioxide, titanium dioxyde.

10. System according to any of claims 8 or 9, wherein the reference sample is surrounded by a sealed ampoule.

11. System according to any of claims 8 to 10, wherein the emission source comprises an optical fiber, the optical fiber being coupled to a monochromatic light source, the excitation source comprising a reception optical fiber coupled to a detector configured to detect a Raman spectrum of the solution.

12. Use of the system according any of claims 8 to 11 to monitor an electrochemical bath during an electroplating process.

13. Use of the method according to any of claims 1 to 7 to monitor an electrochemical bath during an electroplating process.
